# EUROPÄISCHE PATENTSCHRIFT

(11) **EP 0 588 023 B1**
(45) Veröffentlichungstag und Bekanntmachung des Hinweises auf die Patenterteilung: **17.03.1999**
(21) Anmeldenummer: 93111725.3
(22) Anmeldetag: 22.07.1993
(51) Int. Cl.: B27N 3/00

(54) **Verfahren zur Herstellung eines Verbundpartikelkörpers und der nach diesem hergestellte Körper**
Process for the production of a composite particle object and object so obtained
Procédé pour la préparation d'un objet de particules composites et objet ainsi obtenu

(30) Priorität: 17.09.1992 DE 4231097
(43) Veröffentlichungstag der Anmeldung: 23.03.1994
(73) Patentinhaber: EVD ENTWICKLUNGSGESELLSCHAT FÜR VERBUNDMATERIAL DIEZ mbH, D-65582 Diez (DE)
(72) Erfinder: Heuser, Heinz, D-65582 Diez (DE); Knorr, Norbert, D-65582 Diez (DE)
(74) Vertreter: Weber, Dieter, Dr.

(56) Entgegenhaltungen:
- EP-A- 0 262 898
- EP-A- 0 358 119
- EP-A- 0 409 525
- GB-A- 1 267 918
- US-A- 3 718 536

## Beschreibung

Die Erfindung betrifft ein Verfahren zur Herstellung eines Verbundpartikelkörpers, bei welchem das Ausgangsmaterial, als welches mit Kunststoff beschichtete Verbundmaterialien, vorzugsweise Papier oder Karton, verwendet werden, zu Partikeln zerkleinert und nach Bildung einer schüttfähigen Masse in eine Form verbracht wird, wonach die Masse auf mindestens Schmelztemperatur des Kunststoffes erwärmt und unter Druck zu dem Verbundpartikelkörper dadurch verpreßt wird, daß die Partikel zur Bildung eines Kuchens auf einen Träger gestreut und so miteinander verbunden werden, daß der Kuchen zu einer Platte verpreßt wird.

Bekannt sind Preßspanplatten, die in ähnlicher Weise hergestellt werden. Holzspäne, Holzstücke, Sägemehl und dergleichen werden mehr oder weniger zerkleinert und zu einer schüttfähigen Masse gebracht, die mit einem extra Bindemittel versetzt und in eine Form verbracht wird, wonach die damit bindefähige Masse zu der Preßspanplatte verpreßt wird.

Aus der US-A-3,718,536 ist weiterhin ein Verfahren zur Herstellung eines Verbundpartikelkörpers ähnlich der eingangs genannten Art bekannt. Nachdem eine Vorform in einer ersten Stufe hergestellt ist, erfolgt ein zweiter Betriebsschritt, bei welchem die Vorform erwärmt und das Endprodukt, letztlich unter Kühlen des thermoplastischen Materials unter die Erweichungstemperatur, hergestellt wird. Die eigentliche Behandlung der Verbundpartikelmasse durch Temperatur und Druck erfolgt in einer Stufe, wodurch ein gewisser Energieaufwand nicht unterschritten werden kann.

Der Erfindung liegt die Aufgabe zugrunde, ein Herstellungsverfahren für einen Verbundpartikelkörper der eingangs genannten Art so vorzusehen, daß Energie eingespart wird, obwohl ein bestimmter Temperaturzyklus durchlaufen wird.

Diese Aufgabe wird erfindungsgemäß dadurch gelöst, daß der Kuchen zwischen zwei Trägerplatten eingegeben wird und die so entstandene Einheit
a) in einer ersten Verfahrensstufe zwischen die zwei Heizplatten einer Plattenpresse gebracht und dort gleichzeitig erwärmt und unter Druck gesetzt wird und
b) in einer zweiten Verfahrensstufe ohne Kontakt zu den Heizplatten der Plattenpresse einer Kühlung zugeführt wird.

Während im Falle der Preßspanplatte extern ein besonderes Bindemittel zu den Holzspänen oder dem Holzmehl zugemischt werden mußte, um eine verarbeitbare Masse zu haben, ist bei dem erfindungsgemäß verwendeten Herstellungsverfahren eine besondere Zugabe von Bindemitteln oder Klebstoffen extern mit Vorteil nicht erforderlich. Das Papier bzw. der Karton ist mit Kunststoff beschichtet, der bei Erwärmung auf mindestens Schmelztemperatur die einzelnen Partikel fest miteinander verklebt.

Die Erwärmung und die folgende Abkühlung erfordern zwar Energie, bei Anwendung des erfindungsgemäßen Verfahrens aber eine kleinere Menge Energie als bei dem eingangs beschriebenen bekannten Verfahren. Durch die Erfindung kann Energie eingespart werden, weil verwendete Heizkörper (zum Beispiel in Plattenform) nicht den gesamten Temperaturzyklus von 20°C auf 140°C und bei der Kühlung wieder herunter auf 20°C durchlaufen müssen. Es ist zu beachten, daß man entweder die Erwärmung in mehreren Stufen diskontinuierlich oder ineinander übergehend vor und bis zum Endverdichten durchführt und daß man gegebenenfalls ähnlich alternativ das Verdichten in mehreren Stufen separat oder kontinuierlich und ineinander übergehend vornimmt. Besonders zweckmäßig ist es, wenn man das Verdichten und Erwärmen und danach das Abkühlen kontinuierlich nacheinander und ineinander übergehend durchführt. So wurde bei einem speziellen Verfahren ein Betrieb eingerichtet, bei welchem durch Befördern eines Partikelkuchens zuerst durch eine Heißzone und dann durch eine Kühlzone ein Erwärmen und danach Abkühlen in zwei Stufen sogar kontinuierlich nacheinander erfolgen. Währenddessen kann man einen konstanten Druck halten, mit dessen Hilfe in Verbindung mit noch zu beschreibenden Distanzleisten die Dicke einer Verbundplatte bestimmt wird.

Bei dem hier beschriebenen Verfahren geht man von mit Kunststoff beschichteten Kartonabfällen aus, die man nur in Sonderfällen zu handflächengroßen Abschnitten vorzerkleinern und auch nur auf die Größe von Partikeln zerkleinern muß, um die schüttfähige Masse zu erhalten, die dann nach den Maßnahmen der Erfindung verarbeitet werden kann.

Bekannt sind die vorwiegend in der Herstellungsindustrie erzeugten Getränkepackungen aus beidseitig mit Kunststoff beschichtetem Papier. Hier gibt es einerseits bei der Herstellung in kleinerem Maß und nach dem Gebrauch des Endproduktes, d.h. nach dem Entleeren der Flüssigkeitspackung, andererseits in großem Maß Abfälle, die bislang noch nicht zufriedenstellend verarbeitet werden konnten. Gerade diese Abfälle werden als das Ausgangsmaterial gemäß der Erfindung verwendet, hier als Verbundmaterialien bezeichnet.

Bei der Herstellung der Getränkepackungen entstehen aus dem Rohmaterial in Bahn- oder Plattenform saubere Produktionsabfälle, welche direkt auf Partikelgröße zerkleinert werden können. Andererseits fällt bei dem Dualen System Deutschland, DSD, Endverbrauchermaterial an, das gegebenenfalls nach Aussortieren von Fremdmaterial, wie z.B. Flaschen und dergleichen, zu handflächengroßen Abschnitten zerkleinert und gegebenenfalls durch Schreddern weiter zerkleinert, gewaschen und getrocknet wird, so daß es dann ebenfalls auf Partikelgröße nachzerkleinerbar ist. Sowohl die sauberen Produktionsabfälle als auch die nach Reinigung sauberen Endverbraucherabfälle können für die Lagerung in Ballen gepreßt und damit besser transportiert werden, oder sie können in anderer Form gesammelt werden. Unter Partikelgröße, auf welche die Abfälle zerkleinert werden, versteht man das größte Längs- oder Quermaß des einzelnen Partikels bzw. seines Durchmessers. Hier gilt als Partikelgröße ein Bereich von 0,5 mm bis 20 mm, vorzugsweise ein Bereich von 1 mm bis 5 mm. Je kleiner die Partikelgröße, umso feiner stellt sich die nach dem erfindungsgemäßen Verfahren hergestellte Oberfläche des Verbundpartikelkörpers dar.

Die verarbeitbare Masse aus den Partikel kann man entweder zu Platten verarbeiten, extrudieren oder jeweils in dosierten Mengen für den Spritzguß verwenden. In allen drei Anwendungsfällen sorgt die Erwärmung auf mindestens Schmelztemperatur für die Aktivierung des Kunststoffes als masseeigenes Verbindungsmittel, wobei das Endprodukt durch die Aufbringung von Druck in gewünschter Weise geformt werden kann. Es ist dabei zu beachten, daß die Erwärmung spätestens mit der Druckbeaufschlagung erfolgen muß, ganz oder teilweise auch schon vorher erfolgen kann.

Die Bildung der Masse stellt bei der Herstellung einer Verbundpartikelplatte die Bildung des Kuchens dar, der durch frei oder lose Herunterrieselnlassen, durch Bandauftrag, durch Schneckendosierung der zerkleinerten Verbundpartikel auf einen Träger entsteht. Der Kuchen ist zunächst sehr locker und kann gegebenenfalls vorverdichtet werden. Als Träger kann man Bänder oder Platten verwenden, je nachdem ob man kontinuierliche oder diskontinuierliche Transporteinrichtungen verwendet. In beiden Fällen ist auch eine Vorverdichtung möglich, die gegebenenfalls zu einer Stabilisierung des Partikelkuchens oder besserer Formgebung desselben führen kann. Die Verbundpartikel werden wie eine Art Granulat entsprechend der gewünschten Plattendicke lose oder vorverdichtet auf den Träger aufgestreut, und zwar in einer bestimmten Menge, wobei man hier Volumen pro Zeiteinheit steuert. Der Partikelkuchen kann endlos die Form einer Bahn oder auch endliche Abschnitte haben, wenn im Falle eines diskontinuierlichen Herstellungsverfahrens einzelne Platten geformt werden sollen.

Das Vorpressen solcher Platten oder auch der Bahn auf dem betreffenden Träger kann bei Umgebungstemperatur (Zimmertemperatur), d.h. kalt oder alternativ auch warm, durchgeführt werden, weil unter Umständen das Zuführen von Wärme schon in Form des Partikelkuchens eine Verringerung der Erwärmungszeit geben kann, was je nach der verwendeten Apparatur eine Produktionsverkürzung bringen kann.

Unabhängig von der Betrachtung der Temperatur ist daran gedacht, die Verbundpartikel in einer Dicke von maximal der zehnfachen Dicke des Endproduktes, d.h. der Verbundpartikelplatte, aufzustreuen für den Fall, daß die Partikel frei und locker aufgestreut bzw. aufrieseln gelassen werden. Im Falle der Vorverdichtung verringert sich selbstverständlich dieses Verhältnis.

Die gegebenenfalls vorgesehene Vorverdichtung kann zwischen Platten, Bändern oder Walzen erfolgen und hat den Zweck, dem Kuchen schon in frühen Verfahrensstufen einen besseren Halt zu geben, dem Kuchen eine gewünschte Form zu erteilen und im Falle von Bahnen oder Platten insbesondere die Seitenränder zu stabilisieren.

Falls im Verlaufe der ersten Verfahrensstufen schon eine Vorerwärmung erwünscht ist, kann man auch hier schon wie auch bei späteren Verfahrensstufen als Erwärmungsmittel Hochfrequenz, Infrarotstrahlung, Ultraschall oder auch Warmluft verwenden, wobei bei einer besonderen Ausführungsform die Verbundpartikel in einem Zirkulationsofen mit Warmluft umlaufen gelassen wurden.

Die Vorverdichtung erfolgte bei einer speziellen Ausführungsform vorzugsweise auf 1/3 der ursprünglichen Kuchenhöhe, d.h. 2/3 Höhe des hergestellten Kuchens verschwindet durch Vorkomprimieren. Es hat sich gezeigt, daß vorzugsweise die Verdichtung mindestens auf die halbe Höhe des ursprünglichen Kuchens erfolgen sollte. Die dadurch erreichte Stabilisierung des Kuchens erlaubt es, diesem eine bessere Form und Höhe zu geben, ihn besser zu definieren, zu stabilisieren und im weiteren Ablauf des Verfahrens in der Gestalt zu erhalten, so daß letztlich auch die Toleranzen des Endproduktes besser werden.

Es ist bei vielen Verfahrensschritten und Produkten günstig, wenn erfindungsgemäß die Dichte der Verbundpartikelmasse durch Veränderung der den Kuchen bildenden Menge der Partikel eingeregelt wird. Mit Vorteil kann man gemäß der Erfindung auf diese Weise die qualitativen Merkmale des Endproduktes absichern, wobei diese Merkmale sich nach der Anwendung des Endproduktes bestimmten, z.B. die Isolierfähigkeit, die Biegefestigkeit, die Querzugsfestigkeit und dergleichen. Bei Einhaltung einer im wesentlichen gleichen Dichte über längere Zeit im Verlaufe der Durchführung des Verfahrens kann man eine gleichmäßige Qualität sichern.

Für die Einregelung der Dichte erfolgt die Dichtebestimmung vorzugsweise durch die Feststellung des Gewichtes des auf dem betreffenden Träger befindlichen Partikelkuchens. Diese Gewichtsbestimmung kann sowohl beim kontinuierlichen als auch beim diskontinuierlichen Verfahren durchgeführt werden. Mißt man die Dichte in Kilogramm pro dm³ bzw. in Tonnen pro m³, dann sind für das erfindungsgemäße Verfahren und auch für das Produkt Dichten möglich im Bereich zwischen 0,3 bis 5 kg pro dm³ und besonders bevorzugt Dichten im Bereich zwischen 0,5 und 2 kg pro dm³. Die hohen Dichten kann man erreichten, wenn man mit Kunststoff beschichtete Metallpackungen oder Kabel nach dem Zerkleinern der Partikelmasse zumischt.

Interessant und vorteilhaft ist ferner, wenn man erfindungsgemäß die gemessene Differenz zwischen dem Istwert und dem Sollwert bei der Dichteeinregelung in ein Signal umwandelt, vorzugsweise ein elektrisches Signal, mit welchem die Streumenge bei der Bildung des Kuchens verändert wird. Beispielsweise können Walzenspalte, Schieberspalte, Bandgeschwindigkeiten oder andere Fördergeschwindigkeiten je nach Aufgabe dieses Differenzsignals umgesteuert werden, um damit einen Kuchen unterschiedlicher Dichte zu erhalten.

Bei einem speziellen Verfahren hat man festgestellt, daß beispielsweise eine diskontinuierlich erstellte Platte von 6 mm Dicke (Endprodukt) in etwa 6 Minuten auf ca. 160° aufgeheizt werden kann. Der (nur gegebenenfalls vorverdichtete) Partikelkuchen befindet sich beispielsweise zwischen zwei Trägerplatten, und diese Einheit wird zwischen zwei Heizplatten verbracht, die eine Temperatur von etwa 170° haben. Im Augenblick des Beginns der Erwärmung des Partikelkuchens wird erfindungsgemäß der Kuchen mit dem vollen Druck beaufschlagt. Im Heiz-/Druckwerkzeug sorgen Distanzplatten dafür, daß die Endplattendicke des Kuchens nicht unterschritten werden kann. Die Erwärmung erfolgt von Umgebungstemperatur, die im allgemeinen mit etwa 20°C angenommen wird. Die Maximaltemperatur bei Polyethylen hat man für die Erwärmung gemäß der Erfindung auf etwa 140° festgelegt, weil bei dieser Temperatur in kürzester Zeit das Schmelzen des in der gesamten Partikelmasse vorhandenen Kunststoffes erreicht ist. In Verbindung mit der Druckbeaufschlagung erfolgt bei dieser Temperatur von etwa 140°C die Bildung des Preßkörpers, in welchem alle Partikel fest miteinander verbunden sind. Sobald die Schmelztemperatur erreicht ist, beginnt die Erstarrung, wenn man abkühlt, so daß unmittelbar nach Erreichen der Maximaltemperatur die Kühlung erfolgt, während der Druck noch anliegt. Die Abkühlung bewirkt das Verlassen der Schmelztemperatur und Erstarren des zuvor erweichten Kunststoffes, so daß das Produkt in seinen festen Zustand übergeht. Es reicht bei einer bevorzugten Ausführungsform der Erfindung aus, wenn die Endtemperatur 60°C oder bei einer anderen Produktionsreihe 40°C beträgt.

Vorteilhaft ist es erfindungsgemäß, wenn auf die zu einer Platte verpreßte Partikelplatte Verbundpartikel aufgestreut und unter Erwärmen mit der Partikelplatte verpreßt werden. Mit der Oberfläche der Verbundpartikelplatte kann man wenigstens eine andere Platte, die eine mit dem in der Verbundpartikelplatte enthaltenen Kunststoff versiegelungsfähige Oberfläche hat, mit Druck und Wärme verbinden. So kann man im Falle der Partikelplatte als Endprodukt eine Sandwichkonstruktion erreichen. Ähnliche Vorteile ergeben sich auch beim Koextrudieren. Es muß nur immer darauf geachtet werden, daß die Oberfläche der zweiten Platte, welche mit der ersten Partikelplatte verbunden werden soll, eine Oberfläche hat (selbstverständlich kann sie auch massiv aus diesem Material bestehen), die mit dem Kunststoff versiegelungsfähig ist, der in der Verbundpartikelplatte enthalten ist, mit welcher sie verbunden werden soll. Diese sogenannte andere oder zweite Platte, welche mit der ersten Verbundpartikelplatte verbunden werden soll, kann auch beim Aufbringen von Druck und Wärme erst gebildet werden. Beispielsweise kann man auf eine bereits vorhandene Partikelplatte Verbundpartikel aufstreuen und diese Einheit unter Erwärmen verpressen. Eine solche Einheit kann auch anderen Sandwichaufbau haben, wie der Fachmann versteht.

Der durch das neue Verfahren hergestellte Preßkörper ist thermoformbar und in besonderer Weise wasserbeständig. Durch die Kunststoffbeschichtung der Verbundpartikel und den Schmelzvorgang beim Erwärmen während des Herstellungsverfahrens ist ein durch und durch geschlossener Körper geschaffen, der bei Wärmebehandlung gut verformbar ist und sowohl vorher als auch nachher durch Aufbringen von Flüssigkeiten nicht vergleichbar zu beschädigen ist wie Preßspanplatten oder andere Faserkörper.

Dabei ist es besonders vorteilhaft, wenn der Papieranteil an der Gesamtmasse des Verbundpartikelkörpers mindestens 40 Gew.-% beträgt. Die Partikelmasse ist dann gut klebefähig. Beispielsweise wird dieses Verhältnis bzw. diese Bedingung schon dann erfüllt, wenn man die derzeit üblichen Getränkeverpackungen zum Zerkleinern und Herstellen der Partikel verwendet. Erstellt man einen Verbundpartikelkörper, bei welchem der Anteil von Papier zu Kunststoff etwa jeweils 50 Gew.-% beträgt, dann erhält man ebenso eine sogenannte Monoplatte, wie wenn der Polyethylenanteil 25 bis 30 % beträgt. Er kann aber auch 70 bis 75 % betragen.

Zweckmäßigerweise enthält der Verbundpartikelkörper einen Luftanteil von 0 Vol.-% bis 50 Vol.-%. Ein Preßkörper mit 0 Vol.-% hat eine Dichte nahe 1 kg pro dm³ und damit eine hohe Stabilität. Je nach Anwendung kann es zweckmäßig sein, die Dichte auf diesen Wert einzuregeln. Wünscht man den Preßkörper als Temperaturisolationskörper einzusetzen, dann strebt man eine geringere Dichte an, bei welcher der Luftanteil etwa nur 50 Vol.-% des Preßkörpers beträgt. Es versteht sich, daß durch die geringere Wärmeleitfähigkeit der Luft der gesamte Verbundpartikelkörper in letzterem Falle eine wesentlich bessere Temperaturisolierfähigkeit hat.

Bei all den vorstehenden Parametern bzw. Veränderung derselben im Rahmen der hier gegebenen Lehre bleibt der Verbundpartikelkörper dennoch wasserabweisend.

Dies ist besonders dann sichergestellt, wenn bei einer bevorzugten Ausführungsform die Oberfläche des Verbundpartikelkörpers eine nahezu durchgehende Kunststoffschicht aufweist. Man hat insbesondere bei extrudierten Profilen oder spritsgegossenen Körpern festgestellt, daß man im Falle kleinerer Partikelgröße sehr feine Oberflächen bekommt und daß diese Oberflächen fast vollständig geschlossene Kunststoffschichten darstellen, so daß auf diese Weise hergestellte Preßkörper auch bei mit Wasser arbeitenden Maschinen sehr gut als Stützkörper oder sogar Flüssigkeitsbehälter eingesetzt werden können.

Günstig ist es ferner, wenn wenigstens eine Oberfläche des Verbundpartikelkörpers mit mindestens einem zweiten Körper oder einer Beschichtung versiegelt ist und wenn dieser zweite Körper oder die Beschichtung eine Oberfläche hat, die mit dem in dem Verbundpartikelkörper enthaltenen Kunststoffversiegelungsfähig ist. Die Herstellung eines Sandwichaufbaues oder einer mehrschichtigen Platte oder eines mehrschichtigen Körpers mit gekrümmten Oberflächen ist mit anderen Materialien an sich bekannt. Durch das vorstehend beschriebene Verfahren sind aber auch Verbundpartikelkörper unterschiedlicher Oberflächengestaltung in Sandwichaufbau herstellbar. Die erwähnten Preßkörper stellen eine holzähnlichen Werkstoff dar, der sich wie ein Kunststoff mit Einlagerungsmaterialien thermoplastisch verformen läßt. Man kann auf diese Weise viele unterschiedliche Produkte herstellen, wobei hier nur eine Sitzschale, ein Tablett, Automobilverkleidungsteile, wie z.B. eine Hutablage, erwähnt werden.

Weitere Vorteile und Anwendungsmöglichkeiten der vorliegenden Erfindung ergeben sich aus der folgenden Beschreibung bevorzugter Ausführungsbeispiele in Verbindung mit den anliegenden Zeichnungen. Es zeigen:
- Figuren 1 bis 6: unterschiedliche Zustände des verwendeten Ausgangsmaterials und des aus den Verbundpartikeln hergestellten Kuchens,
- Figur 7a: einTemperatur-/Zeitdiagramm für den Erwärmungsvorgang der gebildeten Masse,
- Figur 7b: ein Druck-/Zeitdiagramm bei der Druckbeaufschlagung der gebildeten Masse,
- Figur 8a: teilweise abgeschnitten die perspektivische Ansicht einer Verbundpartikelplatte, bei welcher die Partikel trotz des verdichteten Zustandes in der Oberfläche sichtbar sind,
- Figur 8b: abgebrochen eine Querschnittsansicht ähnlich der Ansicht im Kreis der Figur 8a, wobei ein niedrig verdichteter Zustand gezeigt ist,
- Figur 8c: eine ähnliche Ansicht wie Figur 8b, wobei jedoch eine Querschnittsansicht mit einer Partikelplatte mit höherer Dichte dargestellt ist,
- Figur 9a: eine ähnliche Ansicht wie Figur 8a, bei welcher jedoch ein mehrschichtiger Aufbau gezeigt ist und die Deckschichten hoch verdichtet sind,
- Figur 9b: eine ähnliche Darstellung wie die Figuren 8b und 8c, nur daß hier eine Sandwichkonstruktion gezeigt ist mit fünf aufeinanderliegenden Lagen,
- Figur 10a: eine ähnliche Ansicht wie Figur 9a, wobei die Oberfläche mit einem Holzfurnier veredelt ist,
- Figur 10b: eine ähnliche Ansicht wie Figur 9b, nur daß in dieser abgebrochenen Querschnittsansicht entsprechend der Ansicht im Kreis der Figur 10a vier Lagen gezeigt sind, wobei die zweite und vierte Lage hoch verdichtet gegenüber der dritten Lage dargestellt ist,
- Figur 11a: ein Spritzgußteil in Form einer Doppelschale, in perspektivischer Darstellung,
- Figur 11b: eine abgebrochene Teilschnittansicht einer der Schalen,
- Figur 12a: in perspektivischer Ansicht ein rundes Spritzgußteil und
- Figur 12b: ähnlich wie Figur 11b eine Querschnittsansicht des Spritzgußteils der Figur 12a.

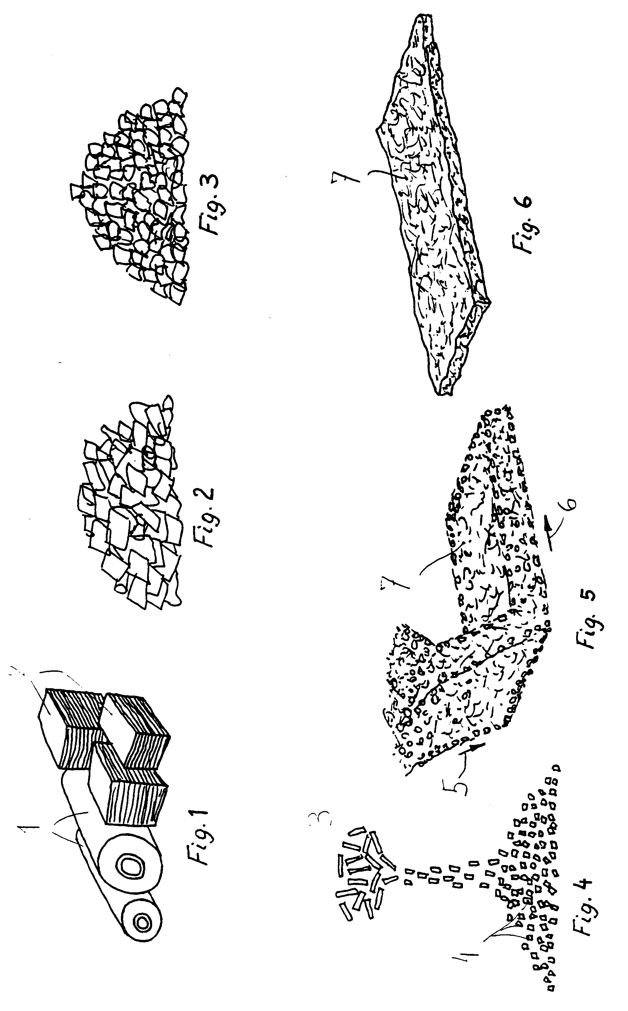

In Figur 1 sind die Produktionsabfälle dargestellt in Form von Rollenware 1 und Abschnittsware 2.

In Figur 2 ist das aus dem Dualen System Deutschland zusammengestellte Endverbrauchermaterial dargestellt, das in Form von gepreßten Ballen angeliefert sein kann, die danach aufgelockert werden, um das Material der Figur 2 zu bilden.

Beide Materialsorten nach Figur 1 und Figur 2 werden bei einem bevorzugten und hier in Betracht gezogenen Ausführungsbeispiel des Verfahrens zur Herstellung einer Preßplatte in die Gestalt der Darstellung der Figur 3 vorzerkleinert, wobei hier die einzelnen Teile etwa handflächengroße Abschnitte sind. Das Fremdmaterial, wie z.B. Flaschen, Dosen usw. ist aussortiert, so daß es sich hier um im wesentlichen homogene Teile handelt, die als sauber und trocken angenommen werden.

Die Vorzerkleinerung kann zweistufig vorgesehen sein, so daß aus dem in Längsstreifen angelieferten Rohmaterial 3 gemäß Figur 4 durch weiteres Zerkleinern Verbundpartikel 4 entstehen. Diese werden gemäß Figur 5 in Richtung des linken Pfeiles 5 lose auf einen nicht gezeigten Träger aufgestreut, der beispielsweise ein Förderband oder eine große Blechplatte sein kann, die in Richtung des Pfeiles 6 unter der Streuöffnung entlang abgeführt wird. Dadurch wird der mit 7 bezeichnete Partikelkuchen gebildet, dessen Dicke bis zum Zehnfachen der Dicke der Preßplatte, des Endproduktes, betragen kann. Die in Pfeilrichtung 5 lose aufgestreute Partikelmasse wird in gesteuerter Menge zugeführt, d.h. es wird darauf geachtet, daß ein ganz bestimmtes Volumen pro Zeiteinheit eingehalten wird. Die nicht dargestellte Dichtebestimmung, die bei dem bevorzugten Verfahren vor der Haupterwärmung und Verpressung erfolgt, gibt Signale vor zur Steuerung dieses Volumens an lose aufgestreuten Partikeln. Die Größe der Partikel beträgt 1 bis 5 mm. Es handelt sich um flächige Abschnitte. Der Partikelkuchen 7 kann aus den vorstehend genannten Gründen vorverdichtet werden, so daß er dann die etwas stabilere Form gemäß Figur 6 hat.

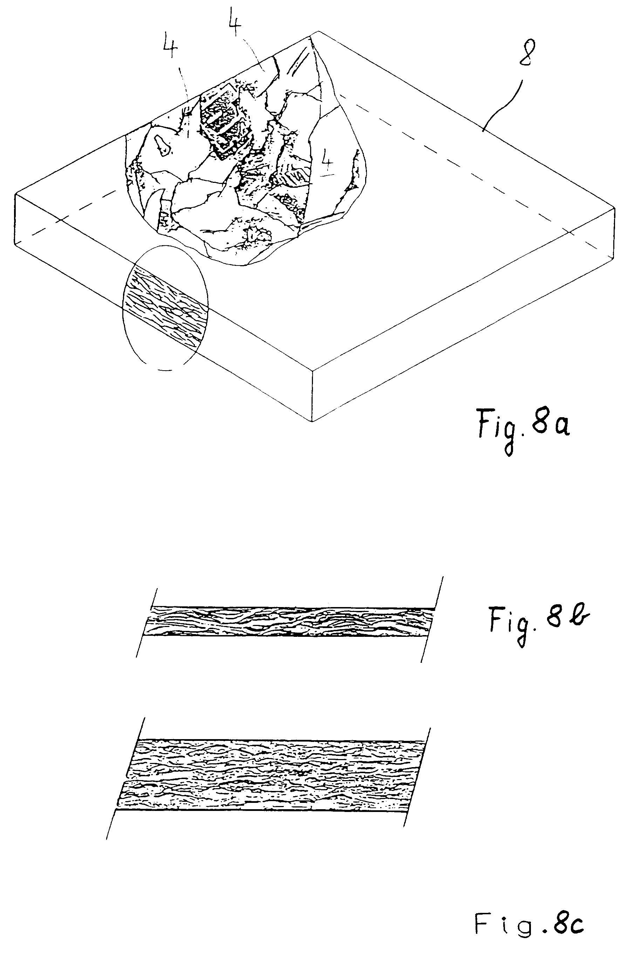

In Figur 8a kann man die einzelnen verpreßten Partikel 4 gut erkennen. Im dortigen Fall sind die einzelnen Partikel größer und können ein Größtmaß von bis zu 20 mm haben.

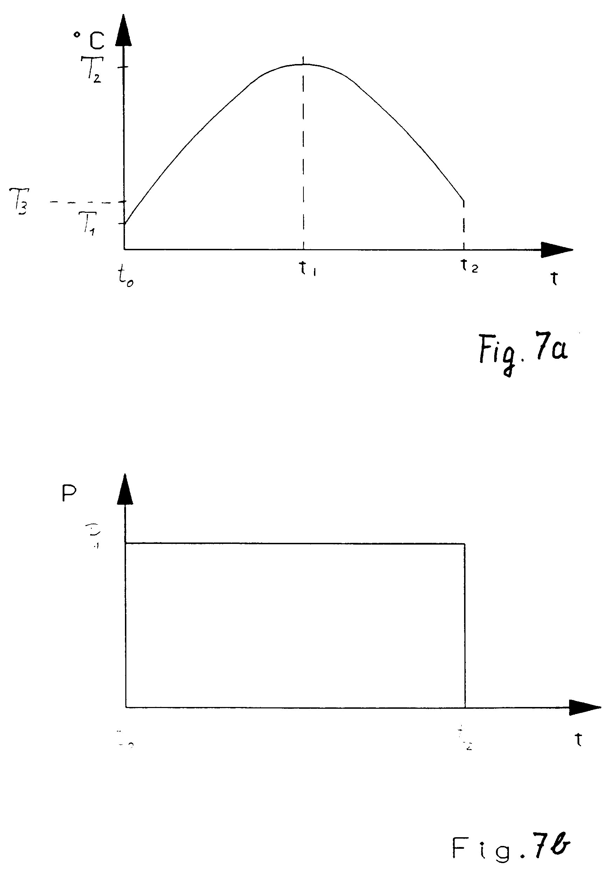

Das hauptsächliche Verdichten kann in einer Heizpresse vorgenommen werden, in welcher Distanzleisten eingelassen sind, zwischen welche im Falle der diskontinuierlichen Plattenherstellung die einzelnen Einheiten von Träger/Partikelkuchen/Träger eingelegt werden. In der Heizpresse beginnt eine Temperatur- und Druckbehandlung gemäß dem Diagramm der Figuren 7a und 7b, beginnend von der Zeit t₀ und endend mit der Zeit t₂. Gemäß Figur 7a erkennt man, wie die Verbundpartikel mit Umgebungstemperatur von etwa 20° bei der Temperatur T₁ angeliefert dem Erwärmungsbeginn unterzogen werden.

Das Diagramm der Figur 7b ist zeitgleich daruntergesetzt, so daß man versteht, daß der Druck in dem Augenblick aufgebracht wird, wenn die Erwärmung begonnen hat. Der Einfachheit halber wird hier davon ausgegangen, daß schon zur Zeit t₀ der Solldruck P₁ anliegt. Nach der Zeit t₁ ist gemäß Figur 7a der Partikelkuchen auf die Temperatur T₂ = 140°C erwärmt worden. Der Aufheizvorgang wird beendet und die heiße Masse unter dem Druck P₂ bis zur Temperatur T₃ abgekühlt. Der Druck P₂ wird zu diesem Zeitpunkt t₂ gemäß dem P-t-Diagramm der Figur 7b abgeschaltet. Die fertig verdichtete Verbundpartikelmasse 8, wie sie in den Figuren 8a, 9a, 10a dargestellt ist, kann aus der Heizpresse herausgenommen und auf die gewünschten Seiten-bzw. Endabmaße abgeschnitten werden. Die auf Format geschnittenen bzw. konfektionierten Verbundpartikelplatten können palettiert und abtransportiert werden.

Die in Figur 8a in perspektivischer Darstellung und in Figur 8b im Schnitt dargestellte Verbundpartikelplatte 8 hat verpreßte und innig miteinander verbundene Partikel 4 und eine Stärke von 3,5 mm. Es handelt sich hier um einen homogenen Plattenaufbau, dessen Partikel eine Größe von mindestens 10 mm haben. Diese Platte ist niedrig verdichtet, wie im Querschnitt der Figur 8b dargestellt sein soll.

Nimmt man kleinere Partikel aus dem Größenbereich von 1 bis 5 mm und stellt man auf eine höhere Dichte ein, dann ergibt sich eine Verbundpartikelplatte, deren Querschnitt abgebrochen in Figur 8c dargestellt ist.

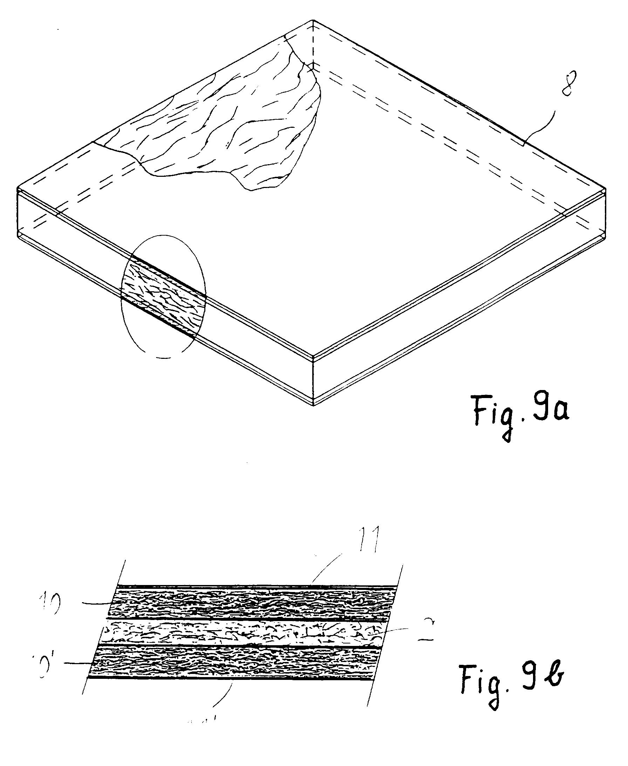

Bei der perspektivisch in Figur 9a dargestellten Partikelplatte 8 handelt es sich um eine Sandwichkonstruktion, deren Mittellage 9 aus einer niedrig verdichteten Partikelplatte besteht, die auf beiden Oberflächen mit einer hoch verdichteten Platte 10,10' verbunden ist, welche beide an ihrer Oberfläche mit einer Aluminiumschicht 11, 11' verbunden ist.

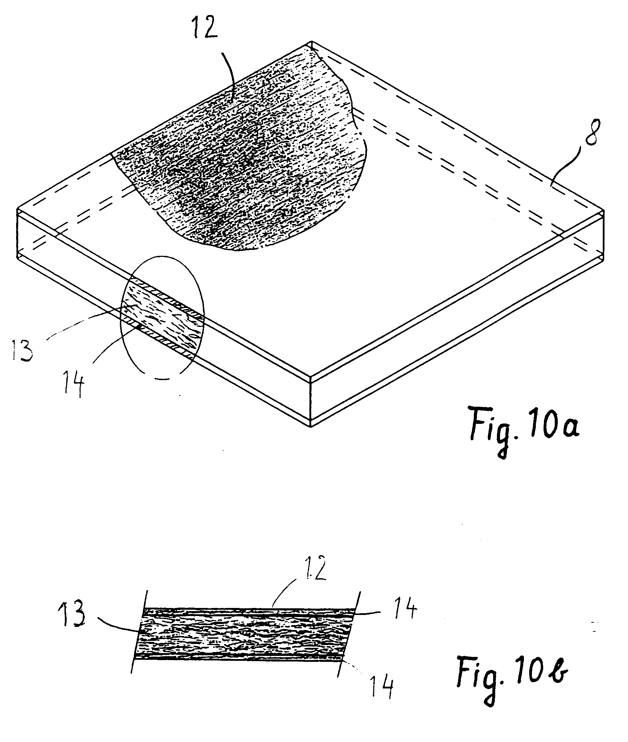

Die perspektivisch in Figur 10a dargestellte Partikelplatte 8 unterscheidet sich in der Deckschichtstruktur, bei der es sich hier um eine Veredelung mit einem Holzfurnier als Decklage 12 handelt. Auf der niedriger verdichteten Mittellage 13 sind jeweils Außenlagen 14 aufgebracht.

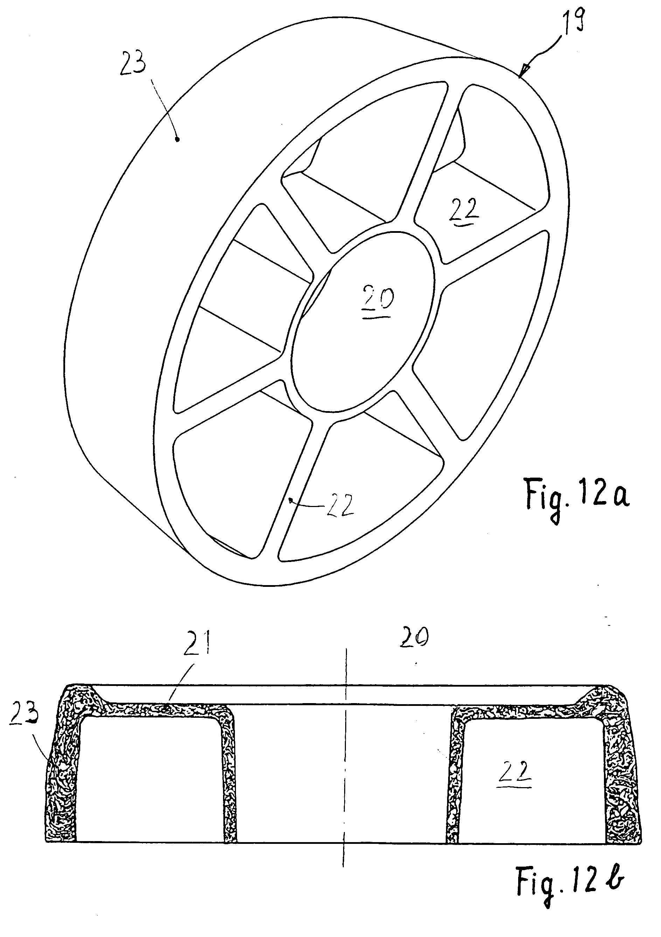

In Figur 11a ist ein Spritzgußteil 15 perspektivisch dargestellt, das aus beispielsweise schwarz eingefärbten Verbundkartonabfällen durch Spritzgießen geformt ist. Man erkennt aus der Querschnittsdarstellung der Figur 11b, daß eine Kontur zur Bildung einer Schale oder Vertiefung mit Boden 16 und Seitenwänden 17 geformt ist, wobei die Oberfläche 18 dieses Preßkörpers eine durchgehende Kunststoffschicht ist.

Ein anderer Spritzgießkörper 19 ist in Figur 12a dargestellt. Er hat Hülsenform mit einer etwa zylinderförmigen Innenwandung 20 und einer über Verbindungsstege 21 an der Stirnfläche und Stege 22 zur radialen Halterung verbundenen Ringfläche 23 in mehr oder weniger kegelstumpfförmiger Ausgestaltung. Dieser Körper 19 kann als Stützhülse verwendet werden. Er ist sehr stabil, starr, thermisch verformbar und wasserabweisend.

### Bezugszeichenliste

- 1: Rollenware
- 2: Abschnittsware
- 3: Rohmaterial
- 4: Verbundpartikel
- 5: Pfeil
- 6: Pfeil
- 7: Partikelkuchen
- 8: Verbundpartikelmasse
- 9: Mittellage
- 10, 10': Platte
- 11, 11': Aluminiumschicht
- 12: Decklage
- 13: Mittellage
- 14: Außenlagen
- 15: Spritzgußteil
- 16: Boden
- 17: Seitenwände
- 18: Oberfläche
- 19: Spritzgießkörper
- 20: Innenwandung
- 21: Verbindungsstege
- 22: Stege
- 23: Ringfläche

## Patentansprüche

1. Verfahren zur Herstellung eines Verbundpartikelkörpers (8, 15, 19), bei welchem das Ausgangsmaterial (1 - 3), als welches mit Kunststoff beschichtete Verbundmaterialien, vorzugsweise Papier oder Karton, verwendet werden, zu Partikeln (4) zerkleinert und nach Bildung einer schüttfähigen Masse (4) in eine Form verbracht wird, wonach die Masse (4) auf mindestens Schmelztemperatur des Kunststoffes erwärmt und unter Druck zu dem Verbundpartikelkörper (8, 15, 19) dadurch verpreßt wird, daß die Partikel (4) zur Bildung eines Kuchens (7) auf einen Träger gestreut und so miteinander verbunden werden, daß der Kuchen (7) zu einer Platte (8) verpreßt wird, d**adurch gekennzeichnet, daß** der Kuchen (7) zwischen zwei Trägerplatten eingegeben wird und die so entstandene Einheit
a) in einer ersten Verfahrensstufe zwischen die zwei Heizplatten einer Plattenpresse gebracht und dort gleichzeitig erwärmt und unter Druck gesetzt wird und
b) in einer zweiten Verfahrensstufe ohne Kontakt zu den Heizplatten der Plattenpresse einer Kühlung zugeführt wird.

2. Verfahren nach Anspruch 1, dadurch gekennzeichnet, daß die Dichte der Verdundpartikelmasse (4) durch Veränderung der den Kuchen bildenden Menge der Partikel eingeregelt wird.

3. Verfahren nach Anspruch 1 oder 2, dadurch gekennzeichnet, daß auf die zu einer Platte (8) verpreßte Partikelplatte (8) Verbundpartikel aufgestreut und unter Erwärmen mit der Partikelplatte (8) verpreßt werden.

## Claims

1. Method for manufacturing a composite particle body (8, 15, 19), in which the starting material (1 - 3), for which plastics coated composite materials, preferably paper or cardboard are used, is comminuted into particles (4) and after formation of a pourable mass (4) is placed in a mould, whereafter the mass (4) is heated to at least the melting temperature of the plastics, and is compressed under pressure into the composite particle body (8, 15, 19), in that the particles (4) are scattered onto a support to form a cake (7) and are bonded together such that the cake (7) is compressed to form a board (8), characterised in that the cake (7) is inserted between two supporting boards and the unit thus made
a) is placed, in a first stage of the method, between two heated boards of a board press and is there heated and simultaneously placed under pressure, and
b) in a second stage of the method, is subjected to cooling without contact with the heating boards of the board press.

2. Method according to claim 1, characterised in that the density of the composite particle mass (4) is adjusted by changing the amount of particles forming the cake.

3. Method according to claim 1 or 2, characterised in that composite particles are scattered on the particle board (8) compressed to form a board (8) and are pressed together with the particle board (8) while being heated.

## Revendications

1. Procédé pour fabriquer un panneau de particules composites (8, 15, 19), dans lequel la matière de départ (1-3), pour laquelle on utilise des matériaux composites enduits de plastique, de préférence du papier ou du carton, est broyée en particules (4) et, après formation d'une masse en vrac (4), est placée dans un moule, ce après quoi la masse (4) est chauffée au moins à la température de fusion du plastique et, sous l'effet d'une pression, est comprimée pour donner le panneau de particules composites (8, 15, 19), les particules (4) étant, pour former un gâteau (7), répandues sur un support et étant ainsi assemblées les unes aux autres, le gâteau (7) étant comprimé pour donner un panneau (8), caractérisé en ce que le gâteau (7) est inséré entre deux plaques supports, et l'unité ainsi formée
a) dans une première étape du procédé, est disposée entre les deux plaques chauffantes d'une presse à plateau et y est simultanément chauffée et soumise à une pression, et
b) dans une deuxième étape du procédé, est, sans contact avec les plaques chauffantes de la presse à plateau, soumise à un refroidissement.

2. Procédé selon la revendication 1, caractérisé en ce que la masse volumique de la masse de particules composites (4) est ajustée par une modification de la quantité des particules formant le gâteau.

3. Procédé selon la revendication 1 ou 2, caractérisé en ce que des particules composites sont répandues sur le panneau de particules (8) comprimé pour donner un panneau (8), et, sous l'action de la chaleur, sont comprimées pour donner le panneau de particules (8).
